# EUROPEAN PATENT SPECIFICATION

(11) **EP 4 202 176 B1**
(45) Date of publication and mention of the grant of the patent: **11.09.2024**
(21) Application number: 22214936.1
(22) Date of filing: 20.12.2022
(51) Int. Cl.: E06B 9/72, E06B 9/68

(54) **AN IMPROVED DRIVING DEVICE**
VERBESSERTE ANTRIEBSVORRICHTUNG
DISPOSITIF D'ENTRAÎNEMENT AMÉLIORÉ

(30) Priority: 27.12.2021 IT 202100032702
(43) Date of publication of application: 28.06.2023
(73) Proprietor: Teleco Automation S.R.L., 31100 Treviso (IT)
(72) Inventor: BORSOI, Luigi, 31012 Capella Maggiore (TV) (IT); COLLOVINI, Roberto, 31100 Treviso (IT)
(74) Representative: Braidotti, Andrea

(56) References cited:
- EP-A1- 3 569 809
- JP-A- H08 232 563

## Description

### FIELD OF TECHNIQUE

The present invention relates to a drive device to be mounted at an installation comprising a first rolling group, preferably motorised, for example a roller blind, and a second rolling group, for example a blackout/filtering curtain or mosquito net. The drive device is provided to drive the movement of the second rolling group which, preferably, acts at the same window, door, glass wall or opening in general in which the first rolling group operates.

### STATE OF THE ART

Both outdoor and indoor installations are known - for example to be mounted in correspondence with windows, doors, glazed windows or other openings in general - which provide for the use of roller blinds. In particular, these installations provide for the use of a motorized shutter which, when open, is wound around a motorized tubular shaft and, when fully or partially closed, is unwound by said shaft, preferably sliding along side guides, to thereby covering all or part of the light from the window, door, glazed window or other opening in general.

The current market requirement is to provide, in correspondence with the roller blind, a roller blind or a roller mosquito net. In particular, for this purpose, a further shaft is also mounted inside the box containing the motorized winding shaft of the shutter, around which the roller blind or mosquito net is wound and unwound. In these known solutions, the spaces inside the housing box for both the roller blind and the roller blind or mosquito net are particularly small and, in particular, the motorisation of the shaft around which the roller blind or mosquito net is wound and unwound is particularly complicated.

Generally, a dedicated motor is used to drive the shaft around which the blackout or mosquito net is wound and unwound. - it is inserted inside the same tree around which the roller blind or mosquito net is wound and unfolded. Furthermore, again with the idea of optimizing the spaces inside the box in which the roller blind winding shaft is also positioned, a shaft with a particularly small diameter is used to roll up/unwind the roller blind or mosquito net and, therefore, the motors used - which, as mentioned, are housed inside the shaft itself - are particularly compact (for example they have a diameter of about 25 mm) and, in the case of smaller dimensions, they have the drawback that they are generally not able to supply an output torque sufficient to cause the rotation of the shaft around which the roller blind or mosquito net is wound/unwound. In particular, in some cases larger motors would be required, which would thus be able to develop a greater output torque, however the dimensions of the shaft around which the roller blind or mosquito net is wound/unwound and/or the installation inside the dumpster do not allow it.

EP3569809 describes a drive device for a roller blind and for a roller blind; said device comprises a mechanism which selectively transmits the rotation torque of the actuator to the roller blind winding tube or to the fabric winding tube.

### OBJECTS OF THE INVENTION

The object of the invention is to propose a device, to be mounted in correspondence with an installation comprising a first rolling group and a second rolling group, and provided for the motorization of the second rolling group, which eliminates or overcomes - at least in part - all the drawbacks which can be found in the known solutions and which, in particular, can be installed in conditions in which the available spaces are reduced.

Another object of the invention is to propose a device to be mounted in correspondence with an installation comprising a roller blind, preferably motorized, to motorise the movement of a blackout/filtering curtain or mosquito net or similar acting on the same window, door, glass wall or opening in which it acts roller blind.

Another object of the invention is to propose a device which allows to move the shaft around which the blackout/filtering curtain or mosquito net is wound or unfolded, optimizing at the same time the installation dimensions inside the box and without the dimensional and performances - present in the known solutions - for the motorisation of said winding/unwinding shaft of the blackout/filtering curtain or mosquito net.

Another object of the invention is to propose a device which is easy to install, even by non-specialised personnel,

Another object of the invention is to propose a device which is easy to program and manage.

Another object of the invention is to propose a device what could it be also controlled remotely from a smartphone both to control the operation of the control device itself and to verify the correct execution of the commands received.

Another object of the invention is to propose a device which is an improvement and/or alternative to the traditional ones.

Another object of the invention is to propose a device which can be obtained simply, quickly and with low costs.

Another object of the invention is to propose an installation for at least two rolling groups which is particularly small in size, which is simple and quick to assemble and install, easy to program and manage, as well as obtainable in a simple, rapid and low-cost way..

### SUMMARY OF THE INVENTION

All of these objects, considered individually or in any combination thereof, and others which will result from the following description are achieved according to the invention with a device of motorisation as defined in claim 1.

### DESCRIPTION OF THE FIGURES

The present invention is hereinafter further clarified in some of its preferred embodiments shown for purely exemplifying and non- limiting purposes with reference to the attached table of drawings, in which:

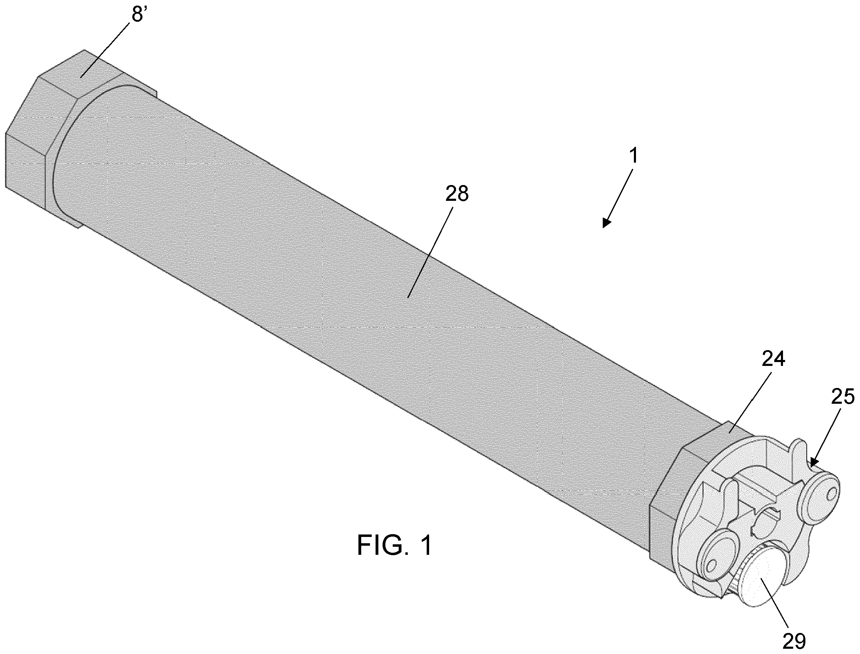

- Figure 1: shows a perspective view of the drive device according to the invention in a first embodiment,

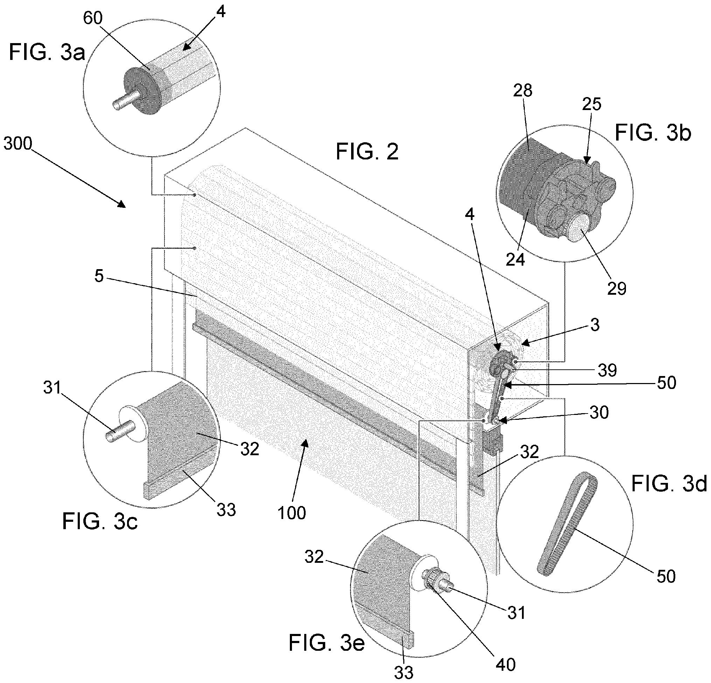

- Figure 2: shows a perspective view of an installation with a first roller blind assembly of the roller blind type, with a second roller blind assembly of the roller blind/mosquito net type and with a device according to the invention for motorizing the second roller blind assembly,
- Figures 3a-3e: show some detail details of fig. 2,

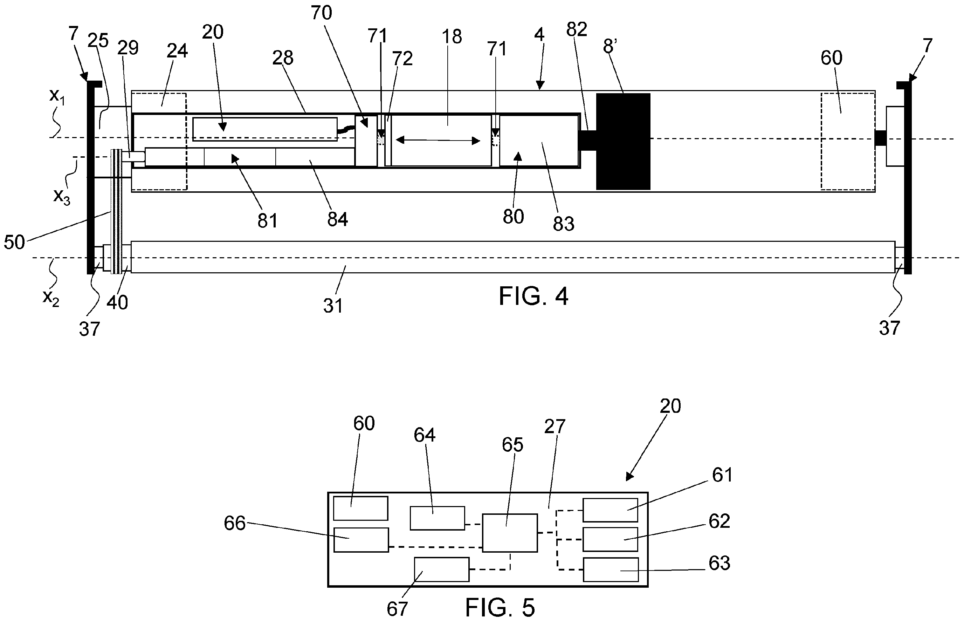

- Figure 4: is a schematic view of an apparatus according to the invention of the type envisaged in the installation of fig. 2, and
- Figure 5: shows in schematic view the control unit of the device according to the invention.

### DETAILED DESCRIPTION OF THE INVENTION AND SOME PREFERRED EMBODIMENTS ITS

As can be seen from the figures, the motorization device according to the invention, globally indicated with the reference number 1, which is applied/assembled, in the example illustrated, at an installation 300 comprising a first rolling group 3, for example of the roller blind type, and a second rolling group 30, for example of the blackout/filtering curtain or mosquito net type.

Preferably, both the first rolling group 3 and the second rolling group 30 act in correspondence with the same window 100, door, glass wall, wall or any opening (even if only for the passage of light or air).

The drive device 1 is configured to drive the movement of both the first rolling group 3 and the second rolling group 30.

Conveniently, the first rolling group 3 it is of the traditional type. Preferably, the first rolling group 3 is a roller-type winding device.

Conveniently, the first rolling group 3 comprises a tubular shaft 4 and a rolling element 5 which has an edge fixed to the tubular shaft and which, following the rotation of the tubular shaft 4, can be wrapped around said shaft and unwound by it.

The rolling element 5 is a rolling covering element and can be a sheet or, preferably, it can be of the type with a rolling shutter and comprise a plurality of parallel strips, articulated to each other, which wrap around the tubular shaft 4.

Preferably, the first rolling group 3 is motorized and, in particular, the tubular shaft 4 is motorized in rotation around its longitudinal development axis X₁

Conveniently, the winding/unwinding of the rolling element 5 around the tubular shaft 4 can take place both along a substantially vertical direction and along a direction more or less inclined with respect to the vertical or horizontal. Conveniently, the winding/unwinding of the rolling element 5 around the tubular shaft 4 can take place along lateral guides for said rolling element 5.

The tubular shaft 4 can be, for example, a shaft which, conveniently, can have any cross section. Preferably, the tubular shaft 4 can have a circular or polygonal section, for example hexagonal, octagonal or similar.

Conveniently, in correspondence with the first rolling group 3, at least one second rolling group 30 is also provided which preferably acts in correspondence with the same window 100, door, glazing, wall or opening (even if only for the passage of light or air) in which the first rolling group 3 acts. Conveniently, in another possible embodiment not represented, the second rolling group 30 could act on a window 100, door, glass wall, wall or opening (even only for the passage of light or air), or on a part of this/s, which is different from the one in acted upon by the first rolling group 3.

Conveniently, the second rolling group 30 is of the traditional type. Preferably, the second rolling group 30 comprises a dimming/filtering curtain roller type or a roller type mosquito net.

Conveniently, the second rolling group 30 comprises a further (second) tubular shaft 31 rotating around its longitudinal development axis X₂ and by a further (second) rolling element 32 which has an edge fixed to the further tubular shaft 31 and which, following the rotation of the further tubular shaft 31, can be wound around a said tree and developed by this.

The further rolling element 32 can be a rolling covering element and, preferably, it can be a sheet in a darkening and/or filtering fabric. Preferably, the further rolling element 32 can use a fabric of the "screen" type, ie with fabric that has a perforated texture which allows to see outside and not vice versa. Preferably, the further rolling element 32 can use a mesh fabric which acts as a mosquito net. Conveniently, in a possible embodiment, the further rolling element 32 can comprise a plurality of mutually articulated horizontal slats.

Both the tubular shaft 4 of the first rolling group 3 and the further tubular shaft 31 of the second rolling group 30 are motorized in rotation around the respective axis of longitudinal development by means of the drive device 1 which is installed and housed inside the tubular shaft 4 of the first rolling group 3.

Conveniently, the winding/unwinding of the further rolling element 32 around its tubular winding shaft 31 can take place both along a substantially vertical direction and along a more or less inclined direction with respect to the vertical. Conveniently, the winding/unwinding of the rolling element 32 around its winding/ unwinding tubular shaft 31 it can take place along lateral guides for said further rolling element 32.

The further tubular shaft 31 of the second rolling group 30 can be, for example, a shaft which, suitably, can have any cross section. Preferably, the further tubular shaft 31 can have a cross section of circular or polygonal shape, for example hexagonal, octagonal or similar.

Conveniently, the internal diameter of the further tubular shaft 31 of the second rolling group 30 is smaller than the internal diameter of the tubular shaft 4 of the first rolling group 3. For example, the internal diameter of said further tubular shaft 31 of the second rolling group 30 may be less than about 15 in diameter mm, while the internal diameter of the tubular shaft 4 of the first rolling group 3 can be equal to or greater than about 25-50 mm.

Conveniently, the cross sections of the tubular shaft 4 and of the further tubular shaft 31 can be the same or different. Conveniently, the rotation axes X₁ and X₂ respectively of the tubular shaft 4 and of the further tubular shaft 31 are parallel to each other.

Preferably, the second rolling group 30 can comprise a rigid crosspiece 33 which is associated with the further rolling element 32 at the opposite edge with respect to that associated with the further tubular shaft 31. Conveniently, the rigid crosspiece 33 can consist of a length of metal or plastic section bar and can have any section.

Conveniently, the second rolling group 30 can comprise two heads 37, each of which is associated with one end of the further tubular shaft 31. In particular, the heads 37 are fixed to an external structure and are configured to idly support said further tubular shaft 31 at the respective ends.

Conveniently, the second rolling group 30 can also comprise an external structure for the further tubular shaft 31 which is configured to be mounted to a fixed structure (not shown), for example to a wall surrounding the opening (window, door, glazed, wall, etc.) to be covered.

Preferably, the further tubular shaft 31 can be mounted inside a compartment or box above the opening and, preferably, inside the same compartment or box in which the tubular shaft 4 of the first rolling group 3 is also housed. Preferably, the external structure for the further tubular shaft 31 can comprise at least a pair of side brackets which suitably support the further tubular shaft 31 at their ends and are associated directly, or through other components, with a fixed structure, for example to a wall that surrounds the opening (window, door, stained glass window, etc.) to be covered.

Conveniently, both the tubular shaft 4 and the further tubular shaft 31 are housed inside the same compartment, preferably inside the same box and, even more preferably, inside the same section bar, and preferably they can form a finished monoblock ready for installation.

As mentioned, inside the tubular shaft 4 of the first rolling group 3 is inserted the device 1 for motorizing the movement of the first rolling group 3 and of the second rolling group 30, in particular for motorizing the rotation:
- of the tubular shaft 4 around its longitudinal development axis X₁ so as to thus cause the winding/unwinding of the rolling element 5 around said tubular winding shaft 4,
- of the further tubular shaft 31 around its longitudinal development axis X₂ so as to thus cause the winding/unwinding of the further rolling element 31 around said further tubular winding shaft 31.

Conveniently, the drive device 1 comprises:
- a casing 28, preferably tubular in shape, configured to be removably inserted inside the tubular shaft 4 of the first rolling group 3,
- a single/only motor 18 which is housed inside the casing 28,
- at least one motorized output member 71 of said motor 18.

Conveniently, said at least one motorized output member 71 is entirely housed inside the casing 28 and is actuated in rotation by said motor 18.

Fittingly, the motor 18 of the drive device 1 is configured to rotate the member 71 in both directions around a longitudinal axis which is parallel to the axes X₁ and X₂. Preferably, the longitudinal rotation axis of the member 71 powered by the motor 18 corresponds to the rotation axis X₁ of the tubular shaft 4.

The drive device 1 also comprises :
- at least a first drive module 80 which is configured to transfer the rotation of said motorized output member 71 of the motor 18 to a first motorized output element 82, which emerges from the casing 28 of the device 1, to which the driving adapter 8' is then intended to be coupled, thus causing rotation of the tubular shaft 4,
- at least one second drive module 81 which is configured to transfer the rotation of said motorized output member 71 of the motor 18 to a second motorized output element 29, to which mechanical transmission means 50 are then intended to be engaged/coupled, thus causing rotation of the further tubular shaft 31.

Conveniently, the first drive module 80 is configured to cause rotation, in particular to drive said tubular shaft 4 into rotation. In particular, the first drive module 80 comprises a first speed reducer 83 which is mechanically connected to a first motorized output element 82, for example a pin with an output pinion, to which a towing adapter (pulley) 8' of the tubular shaft 4 is suitably intended to be connected, to thus cause rotation of the latter around the longitudinal development axis X₁ of the tubular shaft 4.

Suitably, the second drive module 81 is configured to cause rotation, in particular to drive in rotation, said further tubular shaft 31. In particular, the second drive module 81 comprises a second speed reducer 84 which is mechanically connected with a second motorized output element 29, for example a pin rotating about the longitudinal development axis X₃, with which mechanical transmission means 50 can be advantageously associated, for example of the type described in greater detail below.

Conveniently, said at least one motorized output member 71 emerges from the motor 18, and in particular from the casing of the latter. Preferably, a motorized output member 71 is provided which protrudes from the motor 18, and in particular from the casing of the latter, at two mutually opposite ends/bases. Preferably, the motorized output member 71 comprises a first pinion configured to interact and mechanically engage said first drive module 80 and a second pinion configured to interact and mechanically engage said second drive module 81. Suitably, the first pinion and the second pinion can be mounted respectively at the ends, opposite each other, of the same shaft which protrudes with both said ends from the crankcase of the motor 18.

Conveniently, the first drive module 80 comprises a first speed reducer 83. Conveniently, the first drive module 80 comprises at least one gear.

Suitably, the second drive module 81 comprises a second drive reduction unit 84. Suitably, the second drive module 81 comprises at least one gear.

Preferably, the first drive module 80 and the second drive module 81 are positioned inside the casing 28 on the two opposite sides of the motor 18.

The drive device 1 also comprises a mechanism switch 70 configured so as to bring said at least one motorized output member 71 of the motor 18 to a condition in which the same motorized output member 71 is engaged and mechanically interacts with only one of said first drive module 80 and said second drive module 81, thus causing the rotation of the tubular shaft 4 or of the further tubular shaft 31.

In particular, the switching mechanism 70 is configured in such a way that at least the following two conditions can be assumed:
- a first condition in which the motorized output member 71 of the motor 18 is mechanically connected only with the first drive module 80, thus being able to cause only the rotation of the tubular shaft 4, and
- a second condition in which the motorized output member 71 of the motor 18 is mechanically connected only with the second drive module 81, thus being able to cause only the rotation of the further tubular shaft 31.

Suitably, therefore, the motorized output member 71 of the motor 18 comprises at least one condition in which it does not interact mechanically with one of the two drive modules 80 and 81, and this can occur due to lack of contact/mechanical engagement between the motorized output member 71 and the corresponding drive module or even in the presence of a contact/mechanical engagement which is in any case such as not to cause movement of the drive modules 80 and 81.

Conveniently, the switching mechanism 70 is configured in such a way as to be able to assume a further condition in which the motorized output member 71 of the motor 18 is not mechanically connected either with the first drive module 80 or with the second drive module 81.

Conveniently, on the basis of a command coming from the outside (as described below in greater detail), the switching mechanism 70 passes from the first condition (or from said further condition) to the second condition, or passes from the second condition (or from said further condition) to the first condition.

Conveniently, the switching mechanism 70 it is entirely housed inside the casing 28 of the device 1.

Conveniently, the motorized output element 82 and the second motorized output element 29 protrude from the casing 28 at two mutually opposite ends/bases of the casing itself.

Preferably, in the rest/stand-by condition (for example before or after the movement of the tubular shaft 4 or of the further tubular shaft 31), the switching mechanism brings (or keeps) the motorized output member 71 in a condition in which the latter interacts mechanically with one of the two drive modules but without causing any movement since the motor 18 is not activated, or they can bring it into said further condition in which it does not mechanically interact with either of the two drive modules.

Conveniently, in a possible embodiment, the switching mechanism 70 can be configured to cause movement of a latch member so that the motorized output member 71 interacts mechanically and alternately with only one of the two drive modules 80, 81. Suitably, the switching mechanism 70 which causes the movement of the latch and/or the motorized output member 71 can be of a mechanical, magnetic or electromagnetic type.

Preferably, the switching mechanism 70 it is configured to cause the displacement of a hooking member and/or of the motorized output member 71 itself in two mutually opposite directions along a direction which, preferably, is parallel or corresponding to the development direction of the X axis of rotation of the tubular shaft 4. In particular, when it moves in a first direction, the hooking member and/or the motorized output member 71 interacts mechanically only with the first drive module 80, while when it moves in the second direction (which is opposite to the first) the hooking member and/or the motorized output member 71 interacts mechanically only with the first drive module 81.

Conveniently, the second motorized output element 29 of the drive device 1 also emerges from the outside of the tubular shaft 4. In particular, the second motorized output element 29 is configured to emerge from one end of the tubular shaft 4 in which the the casing 28 is intended to be removably inserted and is also configured to be engaged by the motion transmission means 50.

Preferably, the motor 18 of the drive device 1 is a drive/driving tubular electric motor, preferably of the single-phase asynchronous type. Preferably, the motor 18 is an alternating current (for example 230 V AC) or direct current (for example 24V DC) electric motor.

Conveniently, the casing 28 of the drive device 1 can be removably inserted inside the tubular shaft 4. Conveniently, it is understood that the shape and dimensions of the casing 28 are not linked to those of the tubular shaft 4 although they must obviously be compatible with those. In particular, the casing 28 has a shape and dimensions suitable for allowing its insertion and removable housing inside the tubular shaft 4.

Conveniently, the drive device 1 comprises a head 25 which is associated with one end of the casing 28 so as to protrude - at least in part and preferably in full - from one end of the tubular shaft 4 in which the casing 28 is intended to be removably inserted. The head 25 is configured for and/or is intended to be fixed with any known system to an external structure 7, preferably it is fixed to a wing bracket 16 of the latter.

Conveniently, the external structure 7 is configured to be mounted on a fixed structure (not shown), for example on a wall that surrounds the opening (window, door, glass wall, wall, etc.) to be covered. Preferably, the external structure 7 can be defined or mounted inside a compartment or box above the passage. Preferably, this external structure 7 can comprise at least a pair of lateral brackets which are associated directly, or through other components, with a fixed structure, for example with a wall surrounding the opening (window, door, glass wall, etc.) to cover.

Conveniently, the device 1 comprises means - preferably at least one rotating element 24 comprising an adapter-which are mounted on the head 25 and/or on the casing 28 and which are configured to support the tubular shaft 4 in an idle way (i.e. so as to decouple the rotation of the tubular shaft 4 from the head 25 and from the casing 28). Preferably, said means are configured to allow the casing 28 to be housed inside the tubular shaft 4 in an idle manner, i.e. so as to decouple the rotation of the tubular shaft 4 from the casing 28, thus allowing said tubular shaft 4 to rotate around its longitudinal development axis X₁ while the casing 28 remains fixed/still. Conveniently, the rotating element 24 is interposed between the casing 28 or the head 25 of the device 1 and the tubular shaft 4. Conveniently, said means comprise a rotating element 24 which is mounted at the head 25, which it is intended to be integral in rotation with the tubular shaft 4 and which is configured to be idle (that is, to be uncoupled in rotation) with respect to the head 25 and the casing 28. In particular, said element 24 rotates with respect to the fixed head 25 and supports the tubular shaft 4 at one end thereof. In more detail, the head 25 comprises a body which is fixed (ie does not rotate) and furthermore, around a portion of the head 25 and/or of the casing 28, a rotating element 24 is provided which is made integral in rotation with the tubular shaft 4 and which rotates with respect to the fixed head 25. Conveniently, the rotating element 24 also allows the casing 28 to be kept centered inside the tubular shaft 4. Conveniently, the rotating element 24 can comprise an adapter for mounting the tubular shaft 4 and which thus allows coupling with the various shapes of the cross section of the shaft 4.

Furthermore, the device 1 comprises means 39 for fixing the head 25 to the external structure 7, preferably to a lateral bracket 16 of said external structure 7. Preferably, the means 39 comprise any system of the known type for fastening the head 25 to the external structure 7, preferably for fastening to the wing bracket 16 of the latter. Conveniently, the fastening means 39 may comprise a protruding rod (for example with a rectangular cross-section) or at least two jaws which laterally grip an external portion (ie the one intended to always remain outside the tubular shaft 4) of the head 25. Conveniently, at least one first gripping jaw is configured so as to be fixed to the side bracket, preferably by means of mechanical locking devices (for example screws or bolts with corresponding nuts), while the other (second) jaw of grip is configured to be fixed to the first jaw, to thus wrap externally - at least in part - the external portion of the head 25.

Preferably, the drive device 1 can also act as a support for the tubular shaft 4 at one end of the latter.

Conveniently, the second motorized output element 29 of the drive device 1 comprises a gear or pulley which, through the second drive module 81, is rotated by the motor 18 contained in the casing 28 of the device itself. Preferably, the second motorized output element 29 of the drive device 1 comprises a pin integral in rotation with a gear or pulley.

Advantageously a further member 40 is provided which is integral in rotation with the further tubular shaft 31. Advantageously, the further member 40 is configured to be mounted on the further tubular shaft 31, preferably at one end thereof, or it can be integrated in said further tubular shaft 31. Preferably, the further member 40 can be defined by a further pulley or toothed wheel integral in rotation with the further tubular shaft 31 and, for example, has the central hub keyed to said further tubular shaft 31.

Conveniently, as mentioned, means 50 for mechanical transmission of the motion from the second motorized output element 29 of the drive device 1 to the further member 40 integral in rotation with the further tubular shaft 31 can be provided. Suitably, the transmission means 50 are interposed and/or engage with the second motorized output element 29 of the drive device 1 and with the further member 40 which is integral in rotation with the further tubular shaft 31. Preferably, these transmission means 50 can comprise for example at least one belt, smooth or toothed, a rope or a chain or even a transmission gear. More preferably, for example, the transmission means 50 comprises a toothed belt which is wound around a gear (which defines or forms part of the second motorized output element 29) of the drive device 1 and is also wound around a toothed wheel (which defines or forms part of the further member 40) which is integral in rotation with the further tubular shaft 31.

Advantageously, therefore, the winding/unwinding rotation of the further tubular shaft 31 of the second rolling group 30 is caused by the drive device 1 which is housed in an idle way (i.e. so as not to rotate) inside the tubular shaft 4 of the first rolling group 3; in particular, considering that the tubular shaft 4 has a larger diameter - preferably much larger - than the further tubular shaft 31, it is thus possible to use for the movement of the latter a motor 18 with a diameter of even about 35 - 50 mm and this allows you to have a much greater torque output. Conveniently, the motor 18 of the device 1 comprises a motor of dimensions and/or performance suitable for causing movement of the tubular shaft 4 and also of the further tubular shaft 31.

Conveniently, in a possible embodiment, the second motorized output element 29 it can protrude, at least in part, within the lateral dimensions of the head 25. Preferably, the lateral dimensions (which is defined along the direction of exit from the casing 28) of the second motorized output element 29 is completely contained within the inside the lateral dimensions of the head 25. In this case, suitably, passages for the transmission means 50 can be provided inside the head 25.

Suitably, therefore, the casing 28 of the drive device 1 is configured to house a single motor 18 inside it and, in correspondence with a first end zone (base) of the casing 28 the second motorized output element 29 emerges which is moved by the motor 18 through the second drive module 81 and which is intended to be engaged by the transmission means 50 to thus cause the rotation of the further tubular shaft 31, while in correspondence with the other end zone (base) of the casing 28 the motorized output element 82 which is driven by the same motor 18 but through the first drive module 80 and which is associated with a drive adapter 8' to thus cause rotation of the tubular shaft 4.

Conveniently, the drive device 1 is installed in the tubular shaft 4 so that the first end region (base) of the casing 28, from which the second driven output element 29 emerges, is arranged at one end of the tubular shaft 4, thus allowing said second motorized output element 29 to emerge from said end of shaft 4, while the second terminal area (base) of the casing 28, from which the motorized output element 82 emerges, is more inserted inside the shaft 4. Advantageously, at the end of the shaft 4 which is opposite to that in which the drive device 1 is inserted, there is a cap 60 configured to be integral in rotation with the shaft 4 and provided with a protruding pin which is idly supported (i.e. rotationally decoupled) by a suitable fixed element to the external structure 7.

Conveniently, the drive device 1 can also comprise, inside the casing 28, a control unit 20 which is electronically connected to the motor 18 and to the switching mechanism 70.

Conveniently, in a possible embodiment not shown here, the control unit 20 is external to the device 1 and, in particular, can be provided externally to the casing 28 and be electronically connected, in particular by cable, with the motor 18 and the switching mechanism 17.

Preferably, said control unit 20 comprises and is implemented on a traditional electronic board 27. Preferably, on the electronic board 27 housed inside the casing 28 are mounted the electronic components for the control/command of the motor 18 and of the switching mechanism 70.

Conveniently, said control unit 20 comprises a microcontroller or microprocessor 65 which, preferably, is mounted on said electronic board 27. Conveniently, said control unit 20 can comprise a memory unit.

Conveniently, said control unit 20 also comprises a receiver 64 which, preferably, is mounted on said electronic board 27. Conveniently, the receiver 64 is connected to the microcontroller/microprocessor 65.

Conveniently, the device 1 according to the invention comprises a power supply unit 60 which supplies the electronic board 27 with the electric power supply for the motor 18, for the switching mechanism 70, for the microcontroller/microprocessor 65 and for the receiver 64 and, preferably, for other electrical components of the device 1, in particular for those mounted on the electronic board 27. Conveniently, the power supply unit 60 comprises an electrical apparatus connected to and/or mounted on the electronic board 27. Preferably, said electrical apparatus can comprise a DC-DC converter configured to supply voltage and current levels at the output, and therefore power, suitable for the operation of the motor 18 and of the commutation mechanism 70. In particular, the power supply unit 60 is configured to receive as input the electric power supply from the outside, preferably by means of two electric power wires associated with an external electric power source (not shown), preferably from the network. Preferably, the supply voltage can be 24 Volts in direct current. It is also envisaged that, as an alternative, the power supply unit 60 can receive as input the electric power supply from one or more batteries (not shown).

Preferably an interface 63 for controlling the motor 18 is also provided in the control unit 20. Conveniently, the interface 63 comprises driver circuits, which are mounted on the electronic board 27, and which connect the microcontroller/microprocessor 65 to the motor 18 in such a way to be sent to the latter corresponding command signals.

Advantageously an interface 60 for the command of the switching mechanism 70 is also provided in the control unit 20. Conveniently, the interface 62 comprises driver circuits, which are mounted on the electronic board 27, and which connect the microcontroller/microprocessor 65 to the switching mechanism 70 so as to send corresponding command signals to the latter so as to bring them into a condition in which the output of the motor 18 interacts mechanically with only the first drive module 80 or, alternatively, with only the second drive module 81.

Suitably, the microcontroller/microprocessor 65 is programmed in such a way that, on the basis of a command signal received from the outside through the receiver 64, it commands the switching mechanism 70 so as to bring it to a first condition in which the control output member 71 of the motor 18 interacts mechanically only with the first drive module 80 or so as to bring it into a second condition in which the output member 71 of the motor 18 interacts mechanically only with the second drive module 81. Preferably, the mechanism switching 70 it is commanded so as to pass from said first condition to said second condition, or vice versa.

Preferably, the microcontroller/microprocessor 65 is configured so as to control the actuation of the switching mechanism 70 so as to bring it into the first or second condition before commanding the activation of the motor 18, or in any case so that the starting of the motor 18 takes place only when the switching mechanism 70 has been brought into the first or second condition, as commanded on the basis of the signal received from outside.

Preferably, in a possible embodiment, an acoustic signal 67 (for example a buzzer) can be mounted on the electronic board which is electronically connected to the microcontroller/microprocessor 65, to guide the user during the programming of the device 1.

The drive device 1 also comprises means for detecting the position and/or rotation speed of the motor 18. Preferably, said means comprise an encoder 72, preferably a rotating encoder, which is housed inside the casing 28 and is configured to detect the angular position of the motor 18. In particular, preferably, the rotating encoder 72 is of the magnetic type and is mounted on the motor 18. Optionally, the encoder 72 can be mounted inside one or both of the reduction mechanisms of the drive modules 80, 81.

Preferably, an encoder interface 61 is mounted on the electronic board 20 which is electrically connected to the microcontroller/microprocessor65 to send to the latter electrical signals representative of the position, speed and/or direction of advance of the motor 18.

Advantageously, said means, which preferably consist of a rotating encoder 72, detect both the rotation speed of the motor 18 and are also configured to detect, on the basis of the angular path and/or number of rotations performed by said motor 18, reaching the limit switch positions of the tubular shaft 4 or of the further tubular shaft 31 which is actuated by the motor 18. Conveniently, in order to identify the suitable limit switches for each of the two shafts 4 or 31, the microcontroller/microprocessor 65 is configured to consider the data of the rotating encoder 72 in combination with the data relating to the condition in which the switching mechanism 70 is found, in order to thus know whether the actuator 18 is moving the first drive module 80, and therefore is causing the rotation of the tubular shaft 4, or if it is moving the second drive module 81, and therefore it is causing the rotation of the further tubular shaft 31.

Preferably, in a possible embodiment, the microcontroller/microprocessor 65 can be connected with an interface 66 for receiving wired commands and/or signals from outside the device 1.

Preferably inside the tubular casing 28 the receiver 64 is also provided which is connected, via wireless and/or via wire, with the outside to thus receive command signals from the outside to control, on the basis of these, the motor 18 and the switching mechanism 70.

Advantageously, the receiver 64 is of the wireless, preferably radio type. Conveniently, through the receiver 64, the microcontroller/microprocessor 65 can receive from an external transmitter, and in particular from a remote control or even from a cellular phone (in particular of the smartphone type) or from other conventional wireless devices in general, command signals of the motor 18 and of the switching mechanism 70 of the device 1. Advantageously, the receiver 64 can be connected via radio to other conventional sensors present in the environment.

The receiver 64 it can advantageously be replaced by a transceiver, preferably radio, which in addition to sending corresponding command signals to the motor 18 or to the switching mechanism 70 of the device 1 can remotely communicate their status and, preferably, also the operating parameters or the possible presence of anomalies or malfunctions. In particular, for this purpose, the transceiver, as well as to control with its receiver side motor 18 or to the switching mechanism 70 of device 1, with the transmitter side it can transmit signals on the state of the components of the device itself. In essence, or conveniently, in this way the user can remotely control, for example via a mobile phone (preferably via smartphone), the switching on, off and regulation of the motor 18 and/or the actuation of the switching mechanism 70 to thus bring it into the first or second condition, and therefore actuate the first 80 or the second drive module 81 respectively, and can receive, again with the mobile phone (preferably a smartphone), information on the current state of the latter.

Advantageously, a first door can be provided on the side wall of the tubular casing 28 for accessing the inside of the tubular casing itself from the outside, for example to be able to access - if provided - the rechargeable battery. Advantageously, a second door can also be provided in the tubular shaft 4 to access the first door formed in the tubular casing 28. Conveniently, it is intended that the first flap of the tubular casing 28 and the second flap of the tubular shaft 4 face each other.

The present invention also relates to an apparatus of motorization, to be mounted in correspondence with an installation 300 comprising a first motorized rolling group 3, for example a roller blind, and a second rolling group 30, for example a blackout/filtering curtain or mosquito net. In particular, the drive train includes :
- a drive device 1 which - and in particular its casing 28 - is configured to be housed inside the tubular shaft 4 of the first rolling group 3,
- a driving adapter 8' for transferring the motion of the first motorized output element 82 of the drive device 1 to the tubular shaft 4, thus causing the rotational movement of said tubular shaft 4 around the axis X₁,
- mechanical transmission means 50 for transferring the motion of the second motorized output element 29 of the drive device 1 to a rotating member 40 which is configured to be integral in rotation with said further rotating shaft 31, to thus allow said drive device 1 which is mounted in said tubular shaft 4 to cause the rotation movement of said further rotating shaft 31 about the axis X_{2.}

In particular, the second motorized output element 29 of the drive device 1 emerges from the tubular shaft 4 and is actuated in rotation by the motor 18 of the device 1 and the motion of the second motorized output element 29 is transferred, by means of the transmission means 50, to the further member 40 which is integral in rotation with the further tubular shaft 31, to thus cause the rotation of the latter around the axis X_{2.}

The present invention also relates to an installation 300 comprising a first rolling group 3, preferably motorized, for example a roller blind, and a second rolling group 30, for example a blackout/filtering curtain or mosquito net, in which the motorisation of the movement of said two rolling groups 3 and 30 is obtained by means of a device 1 as described above.

Conveniently, in the installation 300 according to the invention, the drive device 1 is mounted inside the tubular shaft 4 at the same/single end of the tubular shaft itself.

Conveniently, in the installation according to the invention, the second motorized output element 29 of the drive device 1 is configured so that its axis of rotation X₃ is parallel with respect to the axis of rotation X₁ of the tubular shaft 4 at the inside which the casing 28 of said device 1 is inserted and also with respect to the axis of rotation X₂ of said further tubular shaft 31 to be moved by means of said device 1.

From what was said it is clear that the drive device and/or apparatus according to the invention it is quite advantageous in that it allows the independent motorization of two winding/unwinding shafts of corresponding rolling elements, while optimizing the installation space. Furthermore, with respect to the state of the art, the problems deriving from the dimensional limits, and therefore performance limits, of the motors that can be used are also resolved since, in the solution according to the invention, the single motor of the device 1 for moving both shafts is installed inside a single winding/unwinding shaft which is the one with the largest diameter.

The solution according to the present invention has been a described herein in particular with reference to an installation in which the first roller blind assembly is of the roller blind type and the second roller blind assembly is of the a blackout/filtering curtain or mosquito net, however it is understood that it can be used in any other application in which the movement of at least two winding/unwinding shafts for corresponding rolling elements is envisaged.

The present invention has been illustrated and described in some of its preferred embodiments, but it is understood that executive variations can be made to them in practice without however departing from the scope of protection as defined by the following claims.

## Claims

1. Drive device (1), to be used in an installation (300) with a first rolling group (3) comprising a tubular winding/unwinding shaft (4) for a rolling element (5) and with at least one second rolling group (30) comprising a further tubular winding/unwinding shaft (31) for a further rolling element (32), said device comprising:
- a casing (28), preferably tubular in shape, which is configured to be removably inserted inside said tubular shaft (4) of said first rolling group (3),
- a single motor (18) which is housed inside said casing (28),
- at least one motorized output member (71) of said motor (18), said at least one motorized output member (71) is entirely housed inside the casing (28) and is actuated in rotation by said motor (18),
- at least one first drive module (80) which is housed inside said casing (28) and which is configured to transfer the rotation of said motorized output member (71) of the motor (18) to a first motorized output member (82) coming out of the casing (28) of the device (1),
- at least one second drive module (81) which is housed inside said casing (28) and which is configured to transfer the rotation of said at least one motorized output member (71) of the motor (18) to a second motorized output element (29) which emerges from the casing (28) of the device (1),
and **characterized by** the fact that it also includes:
- a switching mechanism (70) which is housed within said casing (28) and which is configured so as to assume at least one condition in which said motorized output member (71) is engaged and mechanically interacts with only one of said first drive module (80) and said second drive module (81), thus causing rotation of only the tubular shaft (4) or only of the further tubular shaft (31).

2. Device according to claim 1, **characterized in that** the switching mechanism (70) is configured in such a way that it can assume at least the following two conditions:
- a first condition in which said at least one motorized output member (71) of the motor (18) is mechanically connected only with the first drive module (80), thus being able to cause only the rotation of the tubular shaft (4), and
- a second condition in which said at least one motorized output member (71) of the motor (18) is mechanically connected only with the second drive module (81), thus being able to cause only the rotation of the further tubular shaft (31).

3. Device according to one or more of the preceding claims, **characterized in that** the switching mechanism (70) is configured in such a way as to be able to assume a further condition in which said at least one motorized output member (71) of the motor (18) does not it is mechanically connected neither with the first drive module (80) nor with the second drive module (81).

4. Device according to one or more of the preceding claims, **characterized in that** the switching mechanism (70) is configured to cause movement of a latch element and/or of said at least one motorized output member (71) between said first condition and said second condition.

5. Device according to one or more of the preceding claims, **characterized in that** the first drive module (80) and the second drive module (81) are positioned inside the casing (28) on the two opposite sides of the motor (18).

6. Device according to one or more of the preceding claims, **characterized in that** said first motorized output element (82) and said second motorized output element (29) come out of the casing (28) at the two mutual ends/bases opposite of the envelope itself.

7. Device according to one or more of the preceding claims, **characterized in that** it comprises:
- a head (25) which is associated with said casing (28) so as to protrude, at least in part, from one end of the tubular shaft (4) in which the casing (28) is intended to be removably inserted, said head (25) being configured for and/or being intended to be fixed to an external support structure (7),
- means (24) mounted on said head (25) and/or on said casing (28) and configured to idly support the tubular shaft (4) in which said device (1) is intended to be inserted.

8. Device according to one or more of the preceding claims, **characterized in that** it comprises a control unit (20) which is housed inside the casing (28) and which is electronically connected to the motor (18) and to the switching mechanism (70).

9. Device according to the preceding claim, **characterized in that** said control unit (20) comprises an electronic board (27) in which are mounted:
- a microcontroller or a microprocessor (65),
- at least one receiver (64), preferably of the wireless type, which is electronically connected to said microcontroller or microprocessor (65), to receive external command signals for said motor (18) and for the switching mechanism (70),
- a power supply unit (60) for supplying the electric power supply to said motor (18), to the switching mechanism (70) and/or to other electrical components of the device.

10. Device according to the preceding claim, **characterized in that** said microcontroller/microprocessor (65) is programmed in such a way that, on the basis of a command signal received from the outside via the receiver (64), it commands the switching mechanism (70) so as to bring it to a first condition in which the output member (71) of the motor (18) interacts mechanically only with the first drive module (80) or so as to bring it to a second condition in which the output member (71) of the motor (18) interacts mechanically only with the second drive module (81).

11. Apparatus for driving a first rolling group (3) comprising a tubular shaft (4) for winding/unwinding a rolling element (5), for example a roller blind, and at least a second rolling group (30) comprising a further tubular shaft (31) for winding/unwinding a further rolling element (32), for example a blackout/filtering curtain and/or a mosquito net, said apparatus being **characterized in that** it comprises :
- a drive device (1) according to one or more of the preceding claims and configured to be housed inside the tubular shaft (4) of the first rolling group (3),
- a driving adapter (8') to transfer the motion of the first motorized output element (82) of the drive device (1) to the tubular shaft (4), to thus cause the rotational movement of said tubular shaft (4) around the X axis ₁,
- mechanical transmission means (50) for transferring the motion of the second motorized output element (29) of the drive device (1) to a rotating member (40) which is configured to be integral in rotation with said further rotating shaft (31), to thus allow said drive device (1) which is mounted in said tubular shaft (4) to cause rotation of said further rotating shaft (31) around the axis X₂.

12. Apparatus according to claim 11, **characterized in that** said drive device (1) also acts as a support for the tubular shaft (4) at one end of said tubular shaft (4).

13. Apparatus according to one of the claims 11 or 12, **characterized in that** said transmission means (50) comprise a belt, a rope or a chain which is wound around said second motorized output element (29) of the drive device (1) and also is wrapped around said further member (40) which is integral in rotation with the further tubular shaft (31).

14. Installation (300) for a window, door, glazing or opening in general, said installation comprising:
- a first rolling group (3) with a tubular shaft (4) for winding/unwinding a rolling element (5), for example a roller blind, and
- at least a second rolling group (30) comprising a further tubular shaft (31) for winding/unwinding a further rolling element (32), for example a blackout/filtering curtain and/or a mosquito net,
said installation being **characterized in that** it comprises a drive apparatus according to any of claims 10 to 13.

15. Installation according to the preceding claim, **characterized in that** the internal diameter of the further tubular shaft (31) of the second rolling group (30) is smaller than the internal diameter of the tubular shaft (4) of the first rolling group (3).

## Patentansprüche

1. Antriebsvorrichtung (1) zur Verwendung in einer Anlage (300) mit einer ersten Walzgruppe (3), die eine rohrförmige Auf-/Abwickelwelle (4) für ein Walzelement (5) umfasst, und mit mindestens einer zweiten Walzgruppe (30) umfassend eine weitere rohrförmige Auf-/Abwickelwelle (31) für ein weiteres Walzelement (32), wobei die Vorrichtung umfasst:
- ein vorzugsweise rohrförmiges Gehäuse (28), das so konfiguriert ist, dass es abnehmbar in die Rohrwelle (4) der ersten Walzgruppe (3) eingeführt werden kann,
- einen Einzelmotor (18), der innen des Gehäuses (28) aufgenommen ist,
- mindestens ein motorisiertes Ausgabeelement (71) des Motors (18), wobei das mindestens eine motorisierte Ausgabeelement (71) vollständig innen des Gehäuses (28) aufgenommen ist und durch den Motor (18) in Drehung versetzt wird,
- mindestens ein erstes Antriebsmodul (80), das innen des Gehäuses (28) aufgenommen ist und so konfiguriert ist, dass es die Drehung des motorisierten Ausgabeelements (71) des Motors (18) auf ein erstes motorisiertes Ausgabeelement (82) überträgt, das aus dem Gehäuse (28) der Vorrichtung (1) herauskommt,
- mindestens ein zweites Antriebsmodul (81), das innen des Gehäuses (28) aufgenommen ist und so konfiguriert ist, dass es die Drehung des mindestens einen motorisierten Ausgabeelements (71) des Motors (18) auf ein zweites motorisiertes Ausgabeelement (29) überträgt, das aus dem Gehäuse (28) der Vorrichtung (1) herauskommt,
und **dadurch gekennzeichnet, dass** sie auch umfasst:
- einen Schaltmechanismus (70), der innen des Gehäuses (28) aufgenommen ist und so konfiguriert ist, dass er mindestens einen Zustand annimmt, in dem das motorisierte Ausgabeelement (71) in Eingriff steht und mechanisch mit nur einem des ersten Antriebsmoduls (80) und des zweiten Antriebsmoduls (81) zusammenwirkt, wodurch nur die Drehung der Rohrwelle (4) oder nur der weiteren Rohrwelle (31) bewirkt wird.

2. Vorrichtung nach Anspruch 1, **dadurch gekennzeichnet, dass** der Schaltmechanismus (70) so konfiguriert ist, dass er mindestens die beiden folgenden Zustände annehmen kann:
- einen ersten Zustand, in dem das mindestens eine motorisierte Ausgabeelement (71) des Motors (18) mechanisch nur mit dem ersten Antriebsmodul (80) verbunden ist, so dass es nur die Drehung der Rohrwelle (4) bewirken kann, und
- einen zweiten Zustand, in dem das mindestens eine motorisierte Ausgabeelement (71) des Motors (18) mechanisch nur mit dem zweiten Antriebsmodul (81) verbunden ist, so dass es nur die Drehung der weiteren Rohrwelle (31) bewirken kann.

3. Vorrichtung nach einem oder mehreren der vorhergehenden Ansprüche, **dadurch gekennzeichnet, dass** der Schaltmechanismus (70) so konfiguriert ist, dass er in der Lage ist, einen weiteren Zustand anzunehmen, in dem das mindestens eine motorisierte Ausgabeelement (71) des Motors (18) mechanisch weder mit dem ersten Antriebsmodul (80) noch mit dem zweiten Antriebsmodul (81) verbunden ist.

4. Vorrichtung nach einem oder mehreren der vorhergehenden Ansprüche, **dadurch gekennzeichnet, dass** der Schaltmechanismus (70) so konfiguriert ist, dass er die Bewegung eines Auslöserelements und/oder des mindestens einen motorisierten Ausgabeelements (71) zwischen dem ersten Zustand und dem zweiten Zustand bewirkt.

5. Vorrichtung nach einem oder mehreren der vorhergehenden Ansprüche, **dadurch gekennzeichnet, dass** das erste Antriebsmodul (80) und das zweite Antriebsmodul (81) innen des Gehäuses (28) auf den beiden gegenüberliegenden Seiten des Motors (18) positioniert sind.

6. Vorrichtung nach einem oder mehreren der vorhergehenden Ansprüche, **dadurch gekennzeichnet, dass** das erste motorisierte Ausgabeelement (82) und das zweite motorisierte Ausgabeelement (29) aus dem Gehäuse (28) an den beiden gegenseitigen Enden/Böden gegenüber der Hülle selbst herauskommen.

7. Vorrichtung nach einem oder mehreren der vorstehenden Ansprüche, **dadurch gekennzeichnet, dass** sie umfasst:
- einen Kopf (25), der dem Gehäuse (28) so zugeordnet ist, dass er zumindest teilweise aus einem Ende der Rohrwelle (4) vorsteht, in der das Gehäuse (28) abnehmbar eingeführt werden kann, wobei der Kopf (25) zur Befestigung an einer Trägerstruktur (7) konfiguriert ist und/oder dazu bestimmt ist,
- Mittel (24), die an dem Kopf (25) und/oder an dem Gehäuse (28) eingebaut sind und so konfiguriert sind, dass sie die Rohrwelle (4), in den die Vorrichtung (1) eingeführt werden soll, frei tragen.

8. Vorrichtung nach einem oder mehreren der vorhergehenden Ansprüche, **dadurch gekennzeichnet, dass** sie eine Steuereinheit (20) umfasst, die innen des Gehäuses (28) aufgenommen ist und die elektronisch mit dem Motor (18) und mit dem Schaltmechanismus (70) verbunden ist.

9. Vorrichtung nach dem vorhergehenden Anspruch, **dadurch gekennzeichnet, dass** die Steuereinheit (20) eine elektronische Karte (27) umfasst, in der Folgendes eingebaut ist:
- einen Mikrocontroller oder einen Mikroprozessor (65),
- mindestens einen Empfänger (64), vorzugsweise vom drahtlosen Typ, der elektronisch mit dem Mikrocontroller oder Mikroprozessor (65) verbunden ist, um externe Befehlssignale für den Motor (18) und für den Schaltmechanismus (70) zu empfangen,
- eine Stromversorgungseinheit (60) zur Versorgen des Motors (18), des Schaltmechanismus (70) und/oder anderer elektrischer Komponenten der Vorrichtung mit elektrischer Energie.

10. Vorrichtung nach dem vorhergehenden Anspruch, **dadurch gekennzeichnet, dass** der Mikrocontroller/Mikroprozessor (65) so programmiert ist, dass er, basierend auf eines von außen über den Empfänger (64) empfangenen Befehlssignals, den Schaltmechanismus (70) so befehlt, dass er ihn in einen ersten Zustand bringt, in dem das Ausgabeelement (71) des Motors (18) mechanisch nur mit dem ersten Antriebsmodul (80) zusammenwirkt, oder so, dass er ihn in einen zweiten Zustand bringt, in dem das Ausgabeelement (71) des Motors (18) mechanisch nur mit dem zweiten Antriebsmodul (81) zusammenwirkt.

11. Apparat zum Antreiben einer ersten Walzgruppe (3) mit einer Rohrwelle (4) zum Auf-/Abwickeln eines Walzelements (5), beispielsweise eines Roll-Ladens, und mindestens einer zweiten Walzgruppe (30) mit einer weiteren Rohrwelle (31) zum Auf-/Abwickeln eines weiteren Walzelements (32), beispielsweise eines Verdunkelungs-/Filtervorhangs und/oder eines Moskitonetzes, wobei der Apparat **dadurch gekennzeichnet ist, dass** er umfasst:
- eine Antriebsvorrichtung (1) nach einem oder mehreren der vorhergehenden Ansprüche, die so konfiguriert ist, dass sie innen der Rohrwelle (4) der ersten Walzgruppe (3) aufgenommen ist,
- einen Antriebsadapter (8'), um die Bewegung des ersten motorisierten Ausgabeelements (82) der Antriebsvorrichtung (1) auf die Rohrwelle (4) zu übertragen, um die Drehbewegung der Rohrwelle (4) um die Achse X₁ zu bewirken,
- mechanische Übertragungsmittel (50) zum Übertragen der Bewegung des zweiten motorisierten Ausgabeelements (29) der Antriebsvorrichtung (1) auf ein Drehelement (40), das so konfiguriert ist, dass es mit der weiteren Rohrwelle (31) drehfest verbunden ist, um so zu ermöglichen, dass die Antriebsvorrichtung (1), die in der Rohrwelle (4) eingebaut ist, eine Rotation der weiteren Rohrwelle (31) um die Achse X₂ bewirkt.

12. Apparat nach Anspruch 11, **dadurch gekennzeichnet, dass** die Antriebsvorrichtung (1) auch als Halterung für die Rohrwelle (4) an einem Ende der Rohrwelle (4) dient.

13. Apparat nach einem der Ansprüche 11 oder 12, **dadurch gekennzeichnet, dass** die Übertragungsmittel (50) einen Riemen, ein Seil oder eine Kette umfassen, der/die um das zweite motorisierte Ausgabeelement (29) der Antriebsvorrichtung (1) aufgewickelt ist und auch um das weitere Element (40) aufgewickelt ist, das drehfest mit der weiteren Rohrwelle (31) verbunden ist.

14. Anlage (300) für ein Fenster, eine Tür, eine Verglasung oder eine Öffnung im Allgemeinen, wobei die Anlage umfasst:
- eine erste Walzgruppe (3) mit einer Rohrwelle (4) zum Auf/Abwickeln eines Walzelements (5), z.B. eines Roll-Ladens, und
- mindestens eine zweite Walzgruppe (30) mit einer weiteren Rohrwelle (31) zum Auf-/Abwickeln eines weiteren Walzelements (32), beispielsweise eines Verdunkelungs-/Filtervorhangs und/oder eines Moskitonetzes,
wobei diese Anlage **dadurch gekennzeichnet ist, dass** sie eine Antriebsvorrichtung nach einem der Ansprüche 10 bis 13 umfasst.

15. Anlage nach dem vorhergehenden Anspruch, **dadurch gekennzeichnet, dass** der Innendurchmesser der weiteren Rohrwelle (31) der zweiten Walzgruppe (30) kleiner ist als der Innendurchmesser der Rohrwelle (4) der ersten Walzgruppe (3).

## Revendications

1. Dispositif d'entraînement (1), à utiliser dans une installation (300) avec un premier groupe roulant (3) comprenant un arbre d'enroulement/déroulement tubulaire (4) pour un élément roulant (5) et avec au moins un deuxième groupe de roulement (30) comprenant un arbre d'enroulement/déroulement tubulaire (31) supplémentaire pour un élément roulant (32) supplémentaire, ledit dispositif comprenant :
- un boîtier (28), de préférence de forme tubulaire, configuré pour être inséré de manière amovible à l'intérieur de l'arbre tubulaire (4) dudit premier groupe roulant (3),
- un seul moteur (18) qui est logé à l'intérieur dudit boîtier (28),
- au moins un organe de sortie motorisé (71) dudit moteur (18), ledit au moins un organe de sortie motorisé (71) est entièrement logé à l'intérieur du boîtier (28) et est actionné en rotation par ledit moteur (18),
- au moins un premier module d'entraînement (80) qui est logé à l'intérieur dudit boîtier (28) et qui est configuré pour transférer la rotation dudit organe de sortie motorisé (71) du moteur (18) à un premier organe de sortie motorisé (82) sortant du boîtier (28) du dispositif (1),
- au moins un second module d'entraînement (81) qui est logé à l'intérieur dudit boîtier (28) et qui est configuré pour transférer la rotation dudit au moins un organe de sortie motorisé (71) du moteur (18) à un second organe de sortie motorisé (29) qui émerge du boîtier (28) du dispositif (1),
et **caractérisé par le fait qu'**il inclut également :
- un mécanisme de commutation (70) qui est logé dans ledit boîtier (28) et qui est configuré de manière à assumer au moins une condition dans laquelle ledit organe de sortie motorisé (71) est engagé et interagit mécaniquement avec un seul dudit premier module d'entraînement (80) et dudit second module d'entraînement (81), provoquant ainsi la rotation uniquement de l'arbre tubulaire (4) ou uniquement de l'arbre tubulaire supplémentaire (31).

2. Dispositif selon la revendication 1, **caractérisé en ce que** le mécanisme de commutation (70) est configuré de manière à pouvoir assumer au moins les deux conditions suivantes :
- un premier état dans lequel ledit au moins un organe de sortie motorisé (71) du moteur (18) est connecté mécaniquement uniquement au premier module d'entraînement (80), ne pouvant ainsi provoquer que la rotation de l'arbre tubulaire (4), et
- un deuxième état dans lequel ledit au moins un organe de sortie motorisé (71) du moteur (18) est connecté mécaniquement uniquement au deuxième module d'entraînement (81), ne pouvant ainsi provoquer que la rotation de l'arbre tubulaire (31) supplémentaire.

3. Dispositif selon une ou plusieurs des revendications précédentes, **caractérisé en ce que** le mécanisme de commutation (70) est configuré de manière à pouvoir assumer une condition supplémentaire dans laquelle ledit au moins un organe de sortie motorisé (71) du moteur (18) n'est pas connecté mécaniquement au premier module d'entraînement (80) ni au deuxième module d'entraînement (81).

4. Dispositif selon une ou plusieurs des revendications précédentes, **caractérisé en ce que** le mécanisme de commutation (70) est configuré pour provoquer le déplacement d'un élément de verrouillage et/ou dudit au moins un organe de sortie motorisé (71) entre ladite première condition et ladite seconde condition.

5. Dispositif selon une ou plusieurs des revendications précédentes, **caractérisé en ce que** le premier module d'entraînement (80) et le second module d'entraînement (81) sont positionnés à l'intérieur du boîtier (28) sur les deux côtés opposés du moteur (18).

6. Dispositif selon une ou plusieurs des revendications précédentes, **caractérisé en ce que** ledit premier organe de sortie motorisé (82) et ledit second organe de sortie motorisé (29) sortent du boîtier (28) au niveau des deux extrémités/bases mutuelles opposées à l'enveloppe elle-même.

7. Dispositif selon une ou plusieurs des revendications précédentes, **caractérisé en ce qu'**il comprend :
- une tête (25) qui est associée audit boîtier (28) de manière à faire saillie, au moins en partie, à partir d'une extrémité de l'arbre tubulaire (4) dans lequel le boîtier (28) est destiné à être inséré de manière amovible, ladite tête (25) étant configurée pour et/ou étant destinée à être fixée à une structure de support externe (7),
- des moyens (24) montés sur ladite tête (25) et/ou sur ledit boîtier (28) et configurés pour supporter à vide l'arbre tubulaire (4) dans lequel ledit dispositif (1) est destiné à être inséré.

8. Dispositif selon une ou plusieurs des revendications précédentes, **caractérisé en ce qu'**il comprend une unité de contrôle (20) logée à l'intérieur du boîtier (28) et électroniquement connectée au moteur (18) et au mécanisme de commutation (70).

9. Dispositif selon la revendication précédente, **caractérisé en ce que** ladite unité de contrôle (20) comprend une carte électronique (27) dans laquelle sont montés :
- un microcontrôleur ou un microprocesseur (65),
- au moins un récepteur (64), de préférence du type sans fil, qui est électroniquement connecté audit microcontrôleur ou microprocesseur (65), pour recevoir des signaux de contrôle externes pour ledit moteur (18) et pour le mécanisme de commutation (70),
- une unité d'alimentation (60) pour alimenter en alimentation électrique ledit moteur (18), le mécanisme de commutation (70) et/ou d'autres composants électriques du dispositif.

10. Dispositif selon la revendication précédente, **caractérisé en ce que** ledit microcontrôleur/microprocesseur (65) est programmé de telle sorte que, sur la base d'un signal de contrôle reçu de l'extérieur par l'intermédiaire du récepteur (64), il commande le mécanisme de commutation (70) de manière à l'amener à un premier état dans lequel l'organe de sortie (71) du moteur (18) interagit mécaniquement uniquement avec le premier module d'entraînement (80) ou de manière à l'amener à un deuxième état dans lequel l'organe de sortie (71) du moteur (18) interagit mécaniquement uniquement avec le deuxième module d'entraînement (81).

11. Appareil pour entraîner un premier groupe roulant (3) comprenant un arbre tubulaire (4) pour enrouler/dérouler un élément roulant (5), par exemple un store, et au moins un deuxième groupe roulant (30) comprenant un arbre tubulaire (31) supplémentaire pour enrouler/dérouler un élément roulant (32) supplémentaire, par exemple un rideau occultant/filtrant et/ou une moustiquaire, ledit appareil étant **caractérisé en ce qu'**il comprend :
- un dispositif d'entraînement (1) selon une ou plusieurs des revendications précédentes et configuré pour être logé à l'intérieur de l'arbre tubulaire (4) du premier groupe roulant (3),
- un adaptateur d'entraînement (8') pour transférer le mouvement du premier organe de sortie motorisé (82) du dispositif d'entraînement (1) à l'arbre tubulaire (4), afin de provoquer le déplacement rotationnel dudit arbre tubulaire (4) autour de l'axe X₁,
- des moyens de transmission mécanique (50) pour transférer le mouvement du deuxième organe de sortie motorisé (29) du dispositif d'entraînement (1) à un organe rotatif (40) qui est configuré pour être solidaire en rotation dudit arbre rotatif (31) supplémentaire, pour permettre ainsi audit dispositif d'entraînement (1) qui est monté dans ledit arbre tubulaire (4) de provoquer la rotation dudit arbre rotatif (31) supplémentaire autour de l'axe X₂.

12. Appareil selon la revendication 11, **caractérisé en ce que** ledit dispositif d'entraînement (1) agit également comme support pour l'arbre tubulaire (4) au niveau d'une extrémité dudit arbre tubulaire (4).

13. Appareil selon l'une des revendications 11 ou 12, **caractérisé en ce que** lesdits moyens de transmission (50) comprennent une courroie, une corde ou une chaîne qui s'enroule autour dudit deuxième organe de sortie motorisé (29) du dispositif d'entraînement (1) et s'enroule également autour dudit organe (40) supplémentaire qui est solidaire en rotation de l'arbre tubulaire (31) supplémentaire.

14. Installation (300) pour une fenêtre, une porte, un vitrage ou une ouverture en général, ladite installation comprenant :
- un premier groupe roulant (3) avec un arbre tubulaire (4) pour enrouler/dérouler un élément roulant (5), par exemple un store, et
- au moins un deuxième groupe roulant (30) comprenant un arbre tubulaire (31) supplémentaire pour enrouler/dérouler un élément roulant (32) supplémentaire, par exemple un rideau occultant/filtrant et/ou une moustiquaire,
ladite installation étant **caractérisée en ce qu'**elle comprend un appareil d'entraînement selon l'une des revendications 10 à 13.

15. Installation selon la revendication précédente, **caractérisée en ce que** le diamètre intérieur de l'arbre tubulaire (31) supplémentaire du deuxième groupe roulant (30) est inférieur au diamètre intérieur de l'arbre tubulaire (4) du premier groupe roulant (3).
